Europäisches Patentamt

European Patent Office

Office européen des brevets

(11) Veröffentlichungsnummer: **0 397 072**
**A1**

(12) **EUROPÄISCHE PATENTANMELDUNG**

(21) Anmeldenummer: **90108531.6**

(22) Anmeldetag: **07.05.90**

(51) Int. Cl.⁵: **H01M 8/24, H01M 8/02**

(30) Priorität: **12.05.89 CH 1789/89**

(43) Veröffentlichungstag der Anmeldung:
**14.11.90 Patentblatt 90/46**

(84) Benannte Vertragsstaaten:
**CH DE FR GB IT LI NL SE**

(71) Anmelder: **ASEA BROWN BOVERI AG**
**Haselstrasse**
**CH-5401 Baden(CH)**

(72) Erfinder: **Bossel, Ulf, Dr.**
**Baldeggstrasse 13**
**CH-5400 Baden(CH)**

(54) **Anordnung einer Vielzahl zu einem Stapel zusammengebauter flacher, ebener Hochtemperatur-Brennstoffzellen.**

(57) Anordnung von zu einem Stapel zusammengebauter, aus einem keramischen Feststoffelektrolyten (1), einer porösen Sauerstoffelektrode (2) und einer porösen Brennstoffelektrode (3) bestehenden Hochtemperatur-Brennstoffzellen mit dazwischengeschalteten gasdichten Trennplatten (4), welche in ihrer Ebene auf beiden Seiten Noppen (5) für den elektrischen Kontakt und an ihrem Rand sauerstoffseitige und brennstoffseitige Dichtungskanten (6;7) aufweisen, deren Ebenen auf der Plattenebene senkrecht stehen. Eindeutige statische Verhältnisse für die Anpresskräfte an den Kontakten und ausgezeichnete Zentrierung der Bauelemente unter sich.

# FIG. 2

# Anordnung einer Vielzahl zu einem Stapel zusammengebauter flacher, ebener Hochtemperatur-Brennstoffzellen

## Technisches Gebiet

Hochtemperatur-Brennstoffzellen zur Umwandlung von chemischer Energie in elektrische Energie. Die elektrochemische Energieumwandlung und die hierzu benötigten Vorrichtungen gewinnen dank ihres guten Wirkugnsgrades gegenüber anderen Umwandlungsarten an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Zellen weitgehend unabhängig vom verwendeten Brennstoff sein sollen und eine raumsparende Anordnung gewähren sollen.

Die Erfindung betrifft im engeren Sinne eine Anordnung einer Vielzahl zu einem Stapel zusammengebauter, in Serie geschalteter, flacher, ebener Hochtemperatur-Brennstoffzellen auf der Basis von Zirkonoxyd als Feststoffelektrolyt mit dazwischen geschalteten, elektrisch leitenden Trennplatten.

## Stand der Technik

Hochtemperatur-Brennstoffzellen auf der Basis von dotiertem, stabilisiertem Zirkonoxyd sind in zahlreichen Ausführungen bekannt. Bei flachen ebenen Brennstoffzellen, die zu Stapeln aneinandergereiht sind ("Filterpresse-Prinzip"), sind am äusseren Umfang der plattenförmigen Elemente rahmenartige Dichtungen erforderlich, um die dazwischengeschalteten Bauelemente (Bipolarplatte, Trennplatte, Stromkollektor), welche der Stromübertragung senkrecht zur Plattenebene dienen, eindeutig an die benachbarten Elektroden anzudrücken und einen einwandfreien Kontakt zu gewährleisten. In der Regel werden diese elektrisch isolierenden rahmenartigen Dichtungen so ausgeführt, dass deren Hauptebenen parallel zur Plattenebene des benachbarten Elements zu liegen kommen.

Eine derartige Aufeinanderschichtung von Brennstoffzellen, Trennplatten und flachen rahmenartigen Dichtungen führt zu einem mehrfach statisch unbestimmten System, welches in der Praxis schwer zu beherrschen ist. Entweder ist der Anpressdruck der den elektrischen Kontakt zu garantierenden Teile ungenügend oder der Druck auf die Dichtung reicht zum gasdichten Abschluss nicht aus. Zudem erschweren diese flachen Dichtungen die Zufuhr und Abfuhr der gasförmigen Medien an den Kanten der plattenförmigen Brennstoffzellen und führen zu auffwendiger konstruktiver Gestaltung.

Zum Stand der Technik werden die nachfolgenden Druckschriften genannt:

- O.Antonsen, W.Baukal und W.Fischer, "Hochtemperatur-Brennstoffbatterie mit keramischem Elektrolyten", Brown Boveri Mitteilungen Januar/Februar 1966, Seiten 21-30,
- US-A-4 692 274
- US-A-4 395 468
- W.J.Dollard und W.G.Parker, "An overview of the Westinghouse Electric Corporation solid oxide fuel cell program", Extended Abstracts, Fuel Cell Technology and Applications, International Seminar, Den Haag, Niederlande, 26. bis 29. Oktober, 1987,
- F.J.Rohr, High-Temperature Fuel Cells, Solid Electrolytes, 1978 by Academic Press, Inc., Seite 431 ff.,
- D.C.Fee et al., Monolithic Fuel Gell Development, Argonne National Laboratory, Paper presented at the 1986 Fuel Cell Seminar, Oct. 26 - 29, 1986, Tucson, AZ, U.S. Department of Energy, The University of Chicago.

Die bisher bekannten Anordnungen von Brennstoffzellen und dazwischen geschalteten Bauelementen befriedigen in vielfacher Hinsicht in der Praxis nicht. Es besteht daher ein starkes Bedürfnis, bezüglich Statik, Wärmedehnung und Fertigungstechnologie eindeutigere und einfachere Verhältnisse zu schaffen.

## Darstellung der Erfindung

Der Erfindung liegt die Aufgabe zugrunde, eine Anordnung von ebenen Hochtemperatur-Brennstoffzellen auf der Basis von Zirkonoxyd als Feststoffelektrolyt mit dazwischen geschalteten gasdichten, elektrisch leitenden Trennplatten anzugeben, welche statisch eindeutige Verhältnisse bezüglich der Anpresskräfte an den Kontaktstellen zwischen Bipolarplatte und benachbarten, gegenüberliegenden Elektroden schafft und eine vollständige Abdichtung der einzelnen Bauelemente gegeneinander gewährleistet. Durch geeignete konstruktive und werkstofftechnische Massnahmen soll ausserdem die seitliche Zu- und Abfuhr der gasförmigen Medien an den Kanten der Brennstoffzellen erleichtert und die gesamte Anordnung vereinfacht und betriebssicherer gestaltet werden.

Diese Aufgabe wird dadurch gelöst, dass in der eingangs erwähnten Anordnung die Dichtung benachbarter plattenförmiger Bauelemente an deren Umfang in Ebenen erfolgt, die auf der Plattenebene senkrecht stehen, wobei gleichzeitig durch seitliche Ueberlappung der Randpartien der Bauelemente eine Zentrierung der letzteren voneinander gewährleistet ist.

Weg zur Ausführung der Erfindung

Die Erfindung wird anhand der nachfolgenden, durch Figuren näher erläuterten Ausführungsbeispiele beschrieben. Dabei zeigt:

Fig. 1 einen Schnitt (Aufriss) durch eine Brennstoffzelle und die benachbarte Trennplatte (Bipolarplatte),

Fig. 2 eine perspektivische Darstellung einer Brennstoffzelle und der beiden benachbarten Trennplatten in auseinandergezogenem Zustand,

Fig. 3 eine perspektivische Darstellung einer aus einer Vielzahl von Brennstoffzellen und Trennplatten bestehenden Stapels,

Fig. 4 einen Schnitt (Aufriss) durch einen Stapel von Brennstoffzellen und Trennplatten.

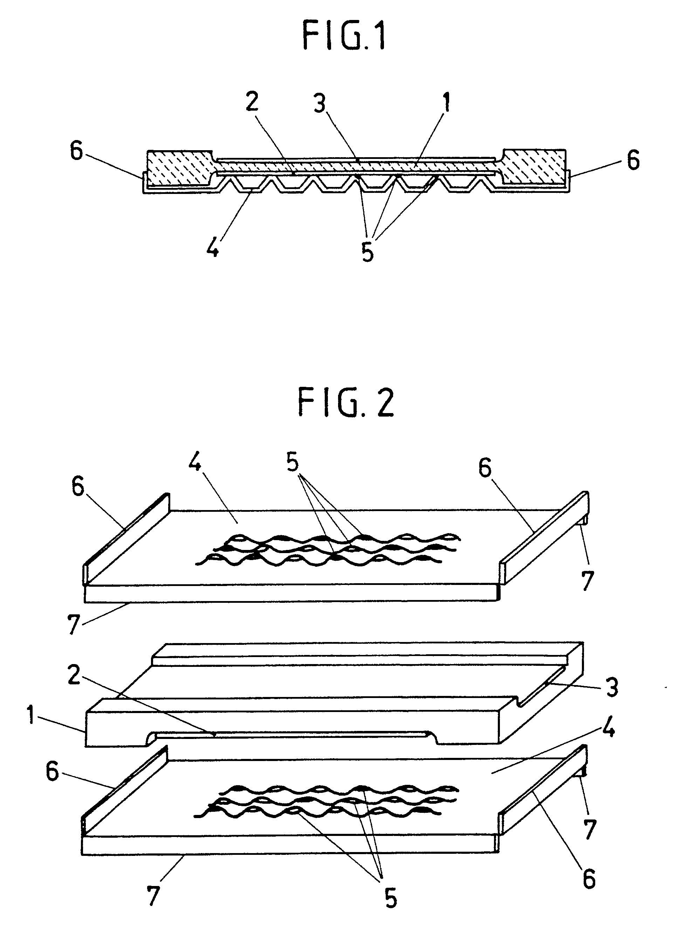

In Fig. 1 ist ein Schnitt (Aufriss) durch eine Brennstoffzelle und die benachbarte Trennplatte (Bipolarplatte) dargestellt. Die eigentliche ebene, flache Brennstoffzelle aus keramischem Material besteht aus dem Feststoffelektrolyten 1 (dotiertes, stabilisiertes $ZrO_2$), der porösen (positiven) Sauerstoffelektrode 2 aus La/Mn-Perowskit und der porösen (negativen) Brennstoffelektrode 3 aus $Ni/ZrO_2$-Cermet. 4 ist eine gasdichte, elektrisch leitende Trennplatte (Bipolarplatte), welche mit Noppen 5 oder mit Rippen versehen ist. Im Schnitt erscheint somit eine gewellte Form. Die Bipolarplatte 4 besteht vorzugsweise aus einem warmfesten, korrosions- und oxydationsbeständigen Hochtemperaturwerkstoff, beispielsweise aus einer Nickelbasis-Superlegierung. Am äusseren Umfang ist die Bipolarplatte 4 auf zwei gegenüberliegenden Seiten in die eine Richtung, auf den dazu senkrecht stehenden Seiten in die andere Richtung rechtwinklig abgekantet. Im Aufriss-Schnitt Fig. 1 ist die sauerstoffseitige Dichtungskante 6 der Bipolarplatte 4 sichtbar.

Fig. 2 zeigt eine perspektivische Darstellung einer Brennstoffzelle und der beiden benachbarten Trennplatten in zur Plattenebene senkrechter Richtung auseinandergezogenem Zustand. Die Brennstoffzelle besteht aus dem keramischen Feststoffelektrolyten 1 in Form einer auf beiden Seiten mit einer flachen Nut versehenen Platte. Die Nuten sind kreuzweise angeordnet und mit den Elektroden ausgelegt: 2 ist die unten angeordnete Sauerstoffelektrode, 3 die oben angebrachte Brennstoffelektrode. 4 stellt die gasdichte, elektrisch leitende Trennplatte (Bipolarplatte) dar. Sie weist eine Vielzahl von gegen die gegenüberliegende Elekrode gerichtete, den Kontakt bewerkstelligende Noppen 5 auf. 6 ist die am Rand verlaufende, nach oben gerichtete sauerstoffseitige Dichtungskante der Bipolarplatte 4. 7 stellt die entsprechende, nach unten gerichtete brennstoffseitige Dichtungskante dar. Durch diesen Aufbau wird eine gegenseitige Verschachtelung benachbarter Bauelemente erreicht, wodurch deren Zentrierung in der Plattenebene gewährleistet ist.

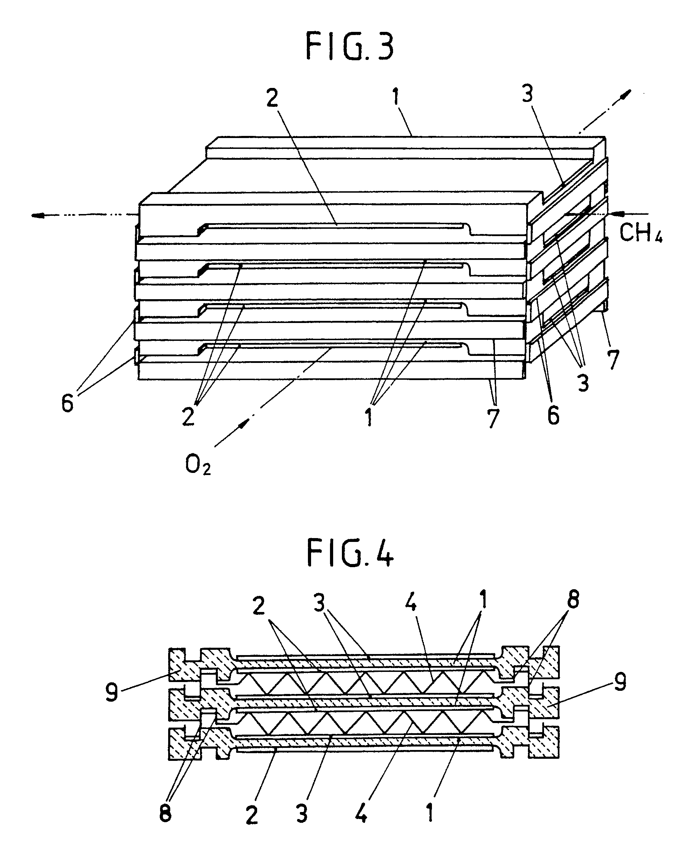

Fig. 3 bezieht sich auf eine perspektivische Darstellung einer aus einer Vielzahl von Brennstoffzellen und Trennplatten bestehenden Stapels. Die Figur stellt praktisch die in Fig. 2 dargestellten, fertig zusammengestellten Bauelemente im montierten Zustand dar. Die Bezugszeichen sind genau die gleichen wie unter Fig. 2 angegeben. Die gegenseitige Verschachtelung der Dichtungskanten 6 und 7 mit den benachbarten Brennstoffzellen ist deutlich zu erkennen. die Strömungsrichtungen für die gasförmigen Medien (Symbole $O_2$ bzw. $CH_4$) sind durch Pfeile und strichpunktierte Linien markiert.

In Fig. 4 ist ein Schnitt (Aufriss) durch einen Stapel von Brennstoffzellen und Trennplatten dargestellt. Die eigentliche Brennstoffzelle besteht aus dem zentral angeordneten keramischen Feststoffelektrolyten 1 in Plattenform, welcher auf beiden Seiten flacher Vertiefungen aufweist, in die die Elektroden 2 (Sauerstoffseite) und 3 (Brennstoffseite) eingelegt sind. Die Platte des Feststoffelektrolyten 1 ist am Umfang 9 dicker ausgeführt und weist allseitig umlaufende Nuten mit rechteckigem Profil auf. Die als Zick-Zack-Linie gezeichnete gasdichte Trennplatte 4 (Bipolarplatte) weist einen Dichtungsrand 8 in Labyrinthanordnung auf, der in die Nuten des Umfangs 9 des Feststoffelektrolyten 1 eingreift. Dadurch, dass mehrere vertikale Flächen des Dichtungsrandes 8 in transversaler Richtung in Serie geschaltet sind, wird eine besonders wirksame Dichtung für die gasförmigen Medien erzielt. Ausserdem wird eine praktisch spielfreie Zentrierung der Bauelemente in seitlicher Richtung gewährleistet.

Ausführungsbeispiel 1:

Siehe Figuren 1 und 2!

Als Grundelement wurde ein keramischer Feststoffelektrolyt 1, bestehend aus mit $Y_2O_3$ stabilisiertem $ZrO_2$ in Form einer dünnen, quadratischen Platte verwendet. Die Dicke der Platte betrug 0,5 mm; ihre Kantenlänge 50 mm. Der Feststoffelektrolyt 1 war auf der einen Seite mit einer porösen Sauerstoffelektrode 2 aus La/Mn-Perowskit von 50 μm Dicke und auf der anderen Seite mit einer porösen Brennstoffelektrode 3 aus Ni/ZrO₂-Cermet von 40 μm Dicke beschichtet.

Aus einer warmfesten Nickellegierung mit dem Handelsnamen "Inconel X" wurden die gasdichten, elektrisch leitenden Trennplatten 4 in Form von Bipolarplatten hergestellt. Die Legierung hatte die nachfolgende Zusammensetzung:

Cr = 15,0 Gew.-%
Ti = 2,5 Gew.-%
Al = 0,7 Gew.-%
Nb = 1,0 Gew.-%
Fe = 7,0 Gew.-%
Si = 0,4 Gew.-%
Mn = 0,5 Gew.-%
C = 0,04 Gew.-%
Ni = Rest

Die durch Tiefziehen aus einem Blech gefertigten Trennplatten 4 hatten eine Dicke von 0,5 mm und waren mit beidseitigen Noppen 5 nach Art eines Eierkartons versehen. Die Noppen 5 hatten auf der Sauerstoffseite eine Höhe von 2 mm, auf der Brennstoffseite eine solche von 1 mm und einen Mittenabstand in Plattenebene von 7 mm. Durch Abkanten der Ränder beim Tiefziehen wurden die sauerstoffseitigen Dichtungskanten 6 von 3 mm Höhe über Plattenebene und die brennstoffseitigen Dichtungsanten 7 von 2 mm Höhe über Plattenebene geschaffen. Das Abkanten wurde derart durchgeführt, dass die ebenen Innenflächen der Dichtungskanten 6 und 7 mit der jeweiligen Plattenebene der Trennplatte 4 einen Winkel von weniger als 90° einschlossen. Dadurch wurden federnde Elemente geschaffen, in welche die aus Feststoffelektrolyt 1 und Elektroden 2 und 3 bestehende Platte spielfrei und dicht eingelegt werden konnte. Eine Vielzahl derartiger Bauelemente wurde zu einem stapel gemäss Fig. 3 zusdammengestellt. Die Prüfung ergab eine hinreichende Dichtigkeit zwischen Sauerstoff- und Brennstoffseite sowie gegenüber der Umgebung.

Ausführungsbeispiel 2:

Siehe Fig. 4!

Als formbestimmendes Bauelement wurde eine ebene Platte aus einem keramischen Feststoffelektrolyten 1 (mit Y₂O₃ stabilisiertes ZrO₂) verwendet. Die quadratische Platte hatte eine Seitenlänge von 60 mm, in der Mitte eine Dicke von 0,5 mm und an den 7,5 mm breiten Rändern eine solche von 2 mm Durch mechanische Bearbeitung wurden in den Rändern 1,4 mm breite und 0,8 mm tiefe versetzte Nuten hergestellt: Beidseitig genutzter Umfang 9. Der 0,5 mm dicke aktive mittlere Teil des Feststoffelektrolyten war mit einer Sauerstoffelektrode 2 und einer Brennstoffelektrode 3 von je 60 μm Dicke gemäss Beispiel 1 belegt. Die aus "Inconel X" wie in Beispiel 1 bestehende Trennplatte 4 bestand aus einem über alles 60 x 60 mm messenden, 0,4 mm dicken Blech. Sie war mit Dichtungsrändern 8 in Labyrinthanordnung versehen. Die durch Abkanten und Tiefziehen gebildeten Nuten und Erhebungen der Dichtungsränder 8 passten genau in den genutzten Umfang 9 des Feststoffelektrolyten 1 hinein. Die trennplatte 4 war im vorliegenden Fall durch Pressen und Tiefziehen in die gewellte Form (Rinnen und Erhebungen) von 2 mm Höhe und 4 mm Mittenabstand bezüglich Plattenebene gebracht worden. Nach dem Zusammenbau zu einem Stapel wurde das Ganze einer Dichtigkeitsprüfung unterzogen. Bei Druckunterschieden von 0,5 bar konnte kein nennenswerter Leckstrom eifnes gasförmigen Mediums festgestellt werden.

Die Erfindung ist nicht auf die Ausführungsbeispiele beschränkt.

Die Vorrichtung besteht grundsätzlich aus einer Anordnung einer Vielzahl zu einem Stapel zusammengebauter, in Serie geschalteter, flacher, ebener Hochtemperatur-Brennstoffzellen 1, 2, 3 auf der Basis von Zirkonoxyd als Feststoffelektrolyt 1 mit dazwischen geschalteten gasdichten, elektrisch leitenden Trennplatte 4, wobei die Dichtung benachbarter plattenförmiger Bauelemente 1, 2, 3, 4 and eren Umfang in Ebenen erfolgt, die auf der Plattenebene senkrecht stehen, indem gleichzeitig durch seitliche Ueberlappung der Randpartien der Bauelemente eine Zentrierung der letzteren untereinander gewährleistet ist. Vorzugsweise ist die Trennplatte 4 an zwei gegenüberliegenden Seiten mit sauerstoffseitigen Dichtungskanten 6 und an den zwei senakrecht dazu verlaufenden, sich gegenüber liegenden Seiten mit brennstoffseitigen Dichtungskanten 7 versehen, welche die benachbarten Brennstoffzellen 1, 2, 3 überlappen und mit deren Randpartien gemeinsame, dicht aneinander liegende Berührungsflächen aufweisen.

In einer anderen Ausführugnsform weist die Trennplatte 4 an je zwei gegenüber liegenden Seiten einen Dichtungsrand 8 in Labyrinthanordnung auf, wobei der keramische Feststoffelektrolyt 1 am Umfang beidseitig mit Nuten 9 versehen ist, in welche der Dichtungsrand 8 der Trennplatte 4 eingreift und eine seitliche Dichtung gewährleistet.

## Ansprüche

1. Anordnung einer Vielzahl zu einem Stapel zusammengebauter, in Serie geschalteter, flacher, ebener Hochtemperatur-Brennstoffzellen (1;2;3) auf der Basis von Zirkonoxyd als Feststoffelektrolyt (1) mit dazwischen geschalteten gasdichten, elektrisch leitenden Trennplatten (4), dadurch gekennzeichnet, dass die Dichtung benachbarter plattenförmiger Bauelemente (1;2;3;4) an deren Umfang in Ebenen erfolgt, die auf der Plattenebene senkrecht stehen, wobei gleichzeitig durch seitliche Ueberlappung der Randpartien der Bauelemente eine Zentrierung der letzteren untereinander gewährleistet ist.

2. Anordnung nach Anspruch 1, dadurch gkennzeichnet, dass die Trennplatte (4) an zwei gegenüberliegenden Seiten mit sauerstoffseitigen Dichtungskanten (6) und an den zwei senkrecht dazu verlaufenden, sich gegenüber leigenden Seiten mit brennstoffseitigen Dichtungskanten (7) versehen sind, welche die benachbarten Brennstoffzellen (1;2;3) überlappen und mit deren Randpartien gemeinsame, dicht aneinander liegende Berührungsflächen aufweisen.

3. Anordnung nach Anspruch 1, dadurch gekennzeichnet, dass die Trennplate (4) an je zwei gegenüber liegenden Seiten einen Dichtungsrand (8) in Labyrinthanordnung aufweisen und dass der keramische Feststoffelektrolyt (1) am Umfang beidseitig mit Nuten (9) versehen ist, in welche der Dichtungsrand (8) der Trennplatte (4) eingreift und eine seitliche Dichtung gewährleistet.

# FIG.1

# FIG. 2

891068

FIG.3

FIG.4

89/ 067

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN, Band 7, Nr. 239 (E-206)[1384], 25. Oktober 1983; & JP-A-58 129 787 (TOKYO SHIBAURA DENKI K.K.) 02-08-1983 * Zusammenfassung * --- | 1 | H 01 M 8/24 H 01 M 8/02 |
| A | PATENT ABSTRACTS OF JAPAN, Band 10, Nr. 367 (E-462)[2424], 9. Dezember 1986; & JP-A-61 161 671 (HITACHI LTD) 22-07-1986 * Zusammenfassung * --- | 1 | |
| A | PATENT ABSTRACTS OF JAPAN, Band 12, Nr. 26 (E-577)[2873], 26. Januar 1988; & JP-A-62 184 772 (MITSUBISHI ELECTRIC CORP.) 13-08-1987 * Zusammenfassung * --- | 1 | |
| A | US-A-3 300 344 (D.T. BRAY) --- | | |
| A | FR-A-1 534 093 (COMPAGNIE FRANCAISE THOMSON-HOUSTON - HOTCHKISS BRANDT) --- | | RECHERCHIERTE SACHGEBIETE (Int. Cl.5) |
| P,X | EP-A-0 355 420 (FUJI ELECTRIC CO.) * Figur 7; Spalte 11, Zeilen 40-58 * ----- | 1 | H 01 M |

Der vorliegende Recherchenbericht wurde für alle Patentansprüche erstellt

| Recherchenort | Abschlußdatum der Recherche | Prüfer |
|---|---|---|
| DEN HAAG | 23-08-1990 | D'HONDT J.W. |